# EUROPÄISCHE PATENTANMELDUNG

(11) **EP 1 213 068 A2**
(43) Veröffentlichungstag der Anmeldung: **12.06.2002**
(21) Anmeldenummer: 01127471.9
(22) Anmeldetag: 28.11.2001
(51) Int. Cl.: B21D 53/26

(54) **Verfahren zum Herstellen eines Lenkradskeletts und Fahrzeuglenkrad**

(30) Priorität: 08.12.2000 DE 10061087
(71) Anmelder: TRW Automotive Safety Systems GmbH & Co. KG, 63743 Aschaffenburg (DE)
(72) Erfinder: Wissel, Willi, 63825 Blankenbach (DE)
(74) Vertreter: Kitzhofer, Thomas, Dipl.-Ing.

(57) **Zusammenfassung**

Die Erfindung betrifft ein Verfahren zum Herstellen eines Skeletts für einen Lenkradkranz, insbesondere ein einstückiges Lenkradskelett. Ein flacher Blechrohling weist einen ringförmigen Abschnitt (10) für den Lenkradkrandkranz auf, der so umgeformt wird, daß er ein Hohlprofil erhält, welches im Querschnitt einen Winkel von mehr als 180° umschließt. Die Umformung erfolgt wenigstens teilweise indem der ringförmige Abschnitt (10) zwischen zwei drehbaren Walzen (22, 24) gebogen wird. Ein entsprechend hergestelltes Lenkrad weist einen hohlen Lenkradkranz mit einem mittigen Kanal zur Zuführung von Kühlluft auf. Der Kanal wird durch das offene Hohlprofil, welches durch das Skelett gebildet wird, und ein daraufgesetztes Schalenteil definiert.

## Beschreibung

Die Erfindung betrifft ein Verfahren zum Herstellen eines Skeletts für einen Lenkradkranz aus einem Metallblech sowie ein Fahrzeuglenkrad mit einem Skelett, das mittels des erfindungsgemäßen Verfahrens hergestellt wird.

Lenkradskelette aus Blech werden üblicherweise durch Tiefziehen geformt und sind deshalb günstig in ihrer Herstellung. Durch das Tiefziehen lassen sich aber im wesentlichen nur U-förmige Querschnittsprofile erreichen. Besser ist es bezüglich der Stabilität, wenn das Profil des Skelettes im Bereich des Lenkradkranzes um mehr als 180° gebogen ist. Zudem läßt sich durch ein weiter geschlossenes Hohlprofil sehr leicht ein Kanal im Inneren des Lenkradkranzes bilden, der bei sogenannten belüfteten Lenkrädern eingesetzt wird. Bei belüfteten Lenkrädern wird im Inneren des Lenkradkranzes Frischluft zugeführt, die durch Öffnungen im Lenkradkranz nach außen gelangt.

Aufgabe der Erfindung ist es, ein kostengünstiges Verfahren zum Herstellen eines Skeletts wenigstens für den Lenkradkranz bereitzustellen, durch das auf kostengünstige Weise ein Querschnittsprofil erzeugt werden kann, das um mehr als 180° gebogen ist.

Das erfindungsgemäße Verfahren sieht folgende Schritte vor: Ein flacher Blechrohling wird so zugeschnitten, daß er einen ringförmigen Abschnitt hat. Der ringförmige Abschnitt wird so umgeformt, daß er ein Hohlprofil erhält, das im Querschnitt einen Winkel größer als 180° umschließt. Die Umformung erfolgt wenigstens teilweise, indem der ringförmige Abschnitt zwischen zwei drehbaren Walzen bewegt wird. Die Walzen rollen am gesamten Umfang des ringförmigen Abschnitts ab und biegen dadurch diesen Abschnitt. Dieses Verfahren erlaubt ein schnelles und kostengünstiges Umformen sowie ein Biegen um etwa 270°, bezogen auf den Querschnitt des Profils.

Gemäß der bevorzugten Ausführungsform wird aber nicht der gesamte Biegevorgang nur durch die beiden Walzen erreicht, vielmehr wird in einem ersten Schritt der flache ringförmige Abschnitt durch Ziehen so umgeformt, daß er ein im wesentlichen U-förmiges Profil erhält. Erst anschließend wird das U-Profil durch das Umformen zwischen den beiden Walzen weiter geschlossen. Diese Kombination ist deshalb besonders vorteilhaft, weil der Ziehvorgang kostenmäßig kaum zu unterbieten ist und damit bereits ein Großteil der Umformung erfolgen kann.

Vorzugsweise hat das U-förmige Profil nach dem Ziehen unterschiedlich lange Schenkel, bezogen auf den Querschnitt. Die Walzen greifen am längeren Schenkel an und formen diesen um. Da die Schenkel unterschiedlich lang sind, kann eine Walze über dem kürzeren Schenkel zu liegen kommen und braucht keine filigrane Form aufweisen, um von der offenen Seite des "U" zwischen die zwei Schenkel zu ragen, damit sie an einem Schenkel angreifen kann.

Vorzugsweise greifen die Walzen am radial äußeren Schenkel des U-förmigen Profils an und biegen diesen umlaufenden Rohrabschnitt radial nach innen, und zwar um etwa weitere 90°, so daß das Profil nach dem Umformen etwa 270° umschließt.

Wird das Skelett für ein belüftetes Lenkrad eingesetzt, so sollte vor dem Umformen eine Anzahl von Löchern in den ringförmigen Abschnitt gestanzt werden, so daß der Blechrohling in einem Schritt geschnitten wird.

Die bevorzugte Ausführungsform sieht vor, daß ein einstückiges Blechskelett mit einem Abschnitt für den Lenkradkranz, einem Abschnitt für wenigstens eine Speiche und einem Abschnitt für die Nabe durch einen Blechrohling gebildet wird, wobei der ringförmige Abschnitt wie erläutert umgeformt wird, wobei dann der äußere Schenkel des U-förmigen Profils radial nach innen gebogen wird. Dadurch wird vermieden, daß im Bereich der Speichen, wo das U-Profil zum L-Profil wird, eine Umformung durch die Walzen erfolgen muß. Auch die Speichen werden bevorzugt zum U-Profil im Ziehvorgang umgeformt, damit durch wenigstens ein schmales Schalenteil die gebildeten Hohlprofile in der Speiche und dem Lenkradkranz zu einem luftführenden Kanal geschlossen werden können.

Die Erfindung betrifft darüber hinaus ein Fahrzeuglenkrad mit einem einteiligen Blechskelett, dessen ringförmiger Abschnitt für den Lenkradkranz nach dem zuvor erläuterten Verfahren so umgeformt ist, daß der ringförmige Abschnitt im Querschnitt ein offenes Hohlprofil aufweist. Ein Schalenteil wird dann zur Bildung eines geschlossenen Kanals am Hohlprofil befestigt.

Das erfindungsgemäße Fahrzeuglenkrad, das im ringförmigen Abschnitt Löcher aufweist, besitzt im Bereich der Nabe wenigstens einen Lüfter, der mit dem Kanal in der Speiche in Strömungsverbindung steht.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Blechrohling, der mittels des erfindungsgemäßen Verfahrens zu einem Blechskelett für ein erfindungsgemäßes Lenkrad umgeformt wird,
Figur 2 einen Schnitt durch eine linke Hälfte des durch Tiefziehen umgeformten Blechrohlings,
Figur 3 eine vergrößerte Schnittansicht im Bereich des Lenkradkranzes während des weiteren Umformens durch zwei Walzen,
Figur 4 das fertig umgeformte Lenkradskelett,
Figur 5 eine Schnittansicht durch das erfindungsgemäße Lenkrad gemäß einer ersten Ausführungsform,
Figur 6 eine Ansicht durch das Lenkrad nach Figur 5 mit einem Schnitt im Bereich des Lenkradkranzes außerhalb der Speichen,
Figur 7 eine teilgeschnittene Ansicht des erfindungsgemäßen Lenkrades gemäß einer zweiten Ausführungsform

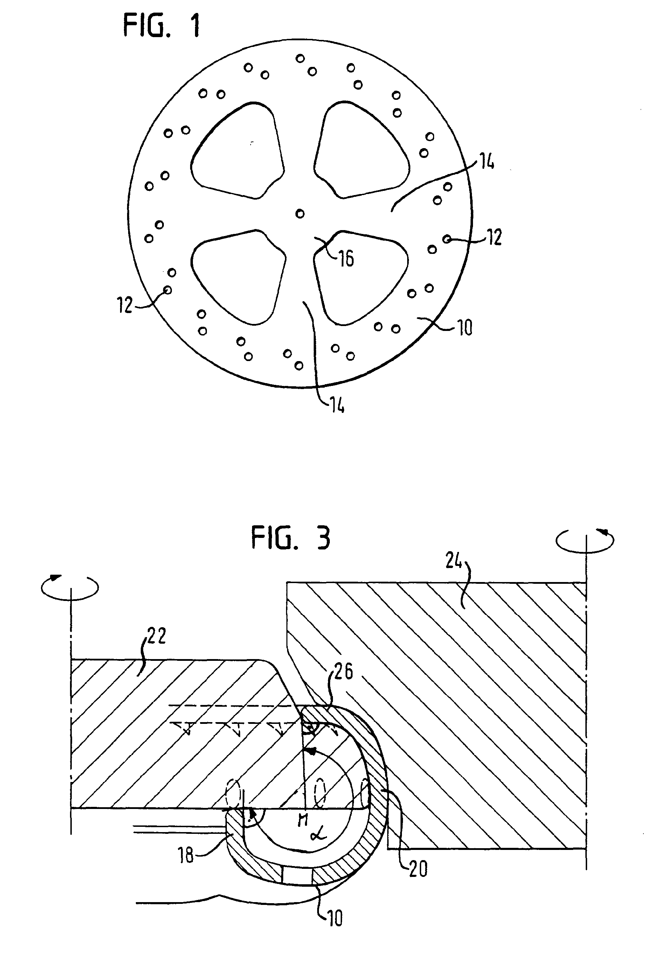

In Figur 1 ist ein flacher, gestanzter Blechrohling zur Herstellung eines einstückigen Lenkradskelettes dargestellt. Der Blechrohling hat einen ringförmigen Abschnitt 10, der später den Skelettabschnitt für den Lenkradkranz bildet, wobei in diesem Abschnitt 10 zahlreiche kleine Löcher 12 eingestanzt sind. Der ringförmige Abschnitt 10 geht in vier Abschnitte 14 für die Speichen über, die wiederum in einen Abschnitt 16 für die Nabe übergehen.

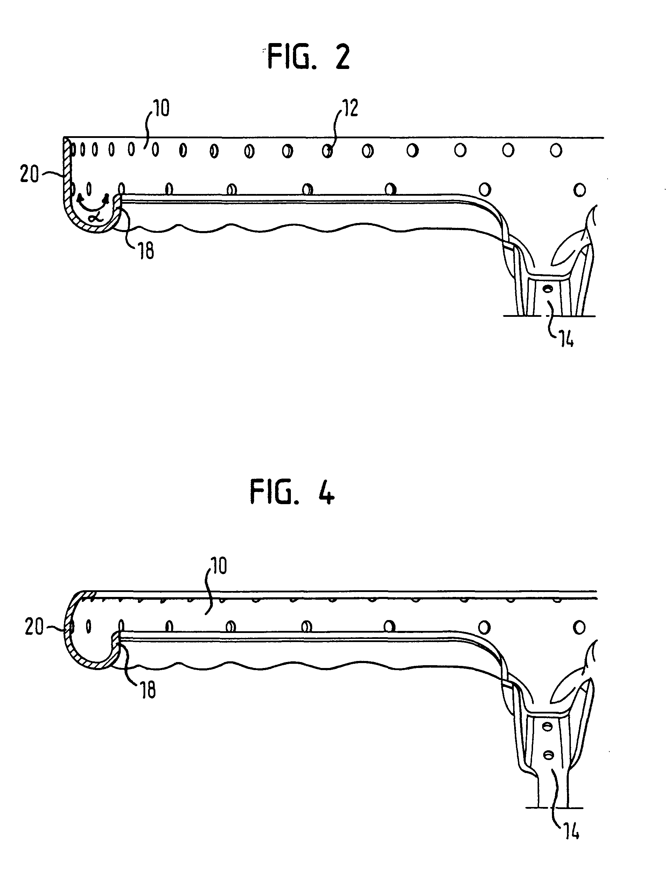

Der Blechrohling wird in einem Tiefziehvorgang so umgeformt, daß er die in Figur 2 dargestellte Gestalt hat. Der ringförmige Abschnitt 10 erhält durch das Umformen, das mit einer 180°-Biegung (siehe Winkel α = 180° in Fig. 2) erfolgt, ein U-Profil mit einem kürzeren, radial inneren Schenkel 18 und einem längeren, radial äußeren Schenkel 20. Auch der Abschnitt 14 für die Speichen ist zu einem U-Profil umgeformt, wobei im Bereich der Speichen 14 der Schenkel 18 nicht vorhanden ist.

In einem nächsten Verfahrensschritt wird der äußere Schenkel 20, der genauer gesagt einen umlaufenden Rand bildet, zwischen zwei in entgegengesetzer Richtung sich drehenden Walzen 22, 24 (siehe Figur 3) radial einwärts um wenigstens weitere 90° gebogen, so daß das dann erzeugte Profil im ringförmigen Abschnitt 10 einen Winkel α von wenigstens 270° umschließt. Die innere Walze 22 erstreckt sich knapp über dem Schenkel 18 bis zur Innenseite des Schenkels 20, und die Walze 24 liegt auf der Außenseite des Schenkels 20 an. Die äußere Walze 24 drückt den oberen Rand 26 des Schenkels 20 nach innen, und die Walze 22 erzeugt eine entsprechende Gegenkraft.

In Figur 4 ist das fertig umgeformte Lenkradskelett dargestellt. Wie zu erkennen ist, geht das etwas weniger offene Hohlprofil im Bereich des ringförmigen Abschnitts 10 in das etwas weiter offene Hohlprofil im Bereich der Speichen 14 über.

In einem anschließenden Schritt werden Schalenteile 30 im Bereich der Speiche 14 und des ringförmigen Abschnitts, der den Kranz bildet, auf das Hohlprofil aufgesetzt, wobei die Schalen aus Kunststoff sind und am Hohlprofil verrasten, so daß im Lenkradkranz und in den Speichen Kanäle 32 gebildet werden, die ineinander übergehen. Schließlich wird das mit den Schalenteilen 30 geschlossene Skelett umschäumt. Das Bezugszeichen 34 bezeichnet einen geschäumten Abschnitt. Schließlich kann auch noch eine Belederung stattfinden. Das Bezugszeichen 36 bezeichnet dabei das verwendete Leder.

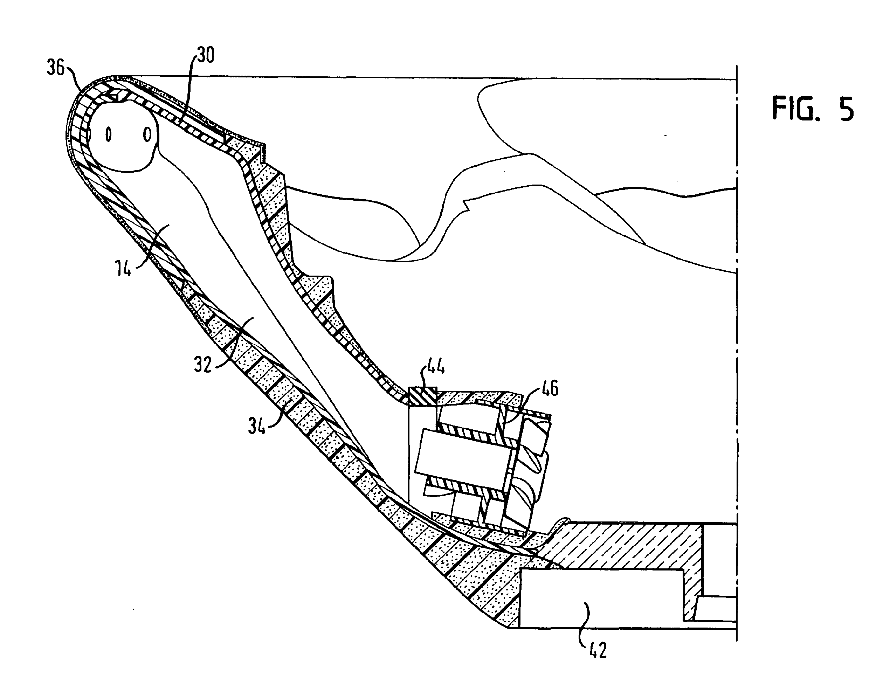

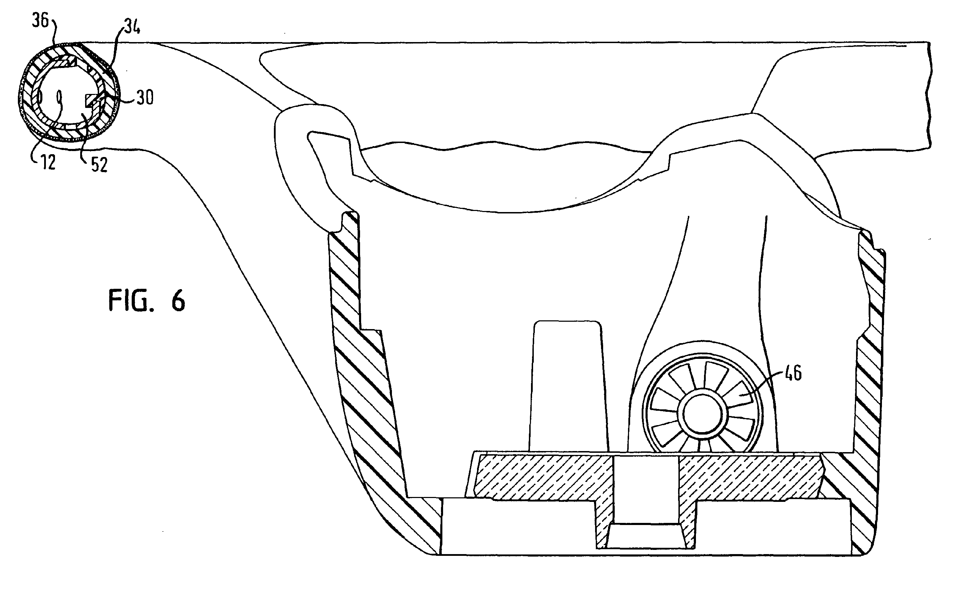

Im Bereich der Nabe 42 des Lenkrads werden über eine elastische Manschette 44 am Lenkradskelett motorisch betriebene Lüfter, gemäß Figur 5 ein Axiallüfter 46, schwingungsentkoppelt befestigt. Es können mehrere Axiallüfter 46 eingesetzt werden oder, falls der Bauraum ausreicht, ein stärkerer Axiallüfter 46 im Bereich einer Speiche. Der Axiallüfter 46 saugt Frischluft an und bläst diese über die Kanäle 32 in den umlaufenden Kanal 52 im Lenkradkranz (siehe Figur 6). Über die Öffnungen 12 strömt die Luft nach außen.

Axiallüfter benötigen einen hohen Bauraum, darüber hinaus sind sie, wenn mehrere eingesetzt werden, schwer zu synchronisieren. Daher müssen Vorkehrungen wie z.B. die elastische Aufhängung 44 vorgesehen sein, damit Schwingungserscheinungen nicht auftreten.

Aus diesem Grund kann es vorteilhaft sein, einen Radiallüfter zu verwenden, denn Radiallüfter haben einen geringeren Platzbedarf im Verhältnis zu ihrer Pumpleistung. Insbesondere die Unterbringung nahe an den oder in den Speichen erfordert bei Axiallüftern Abstriche im Design im Bereich der Speichen.

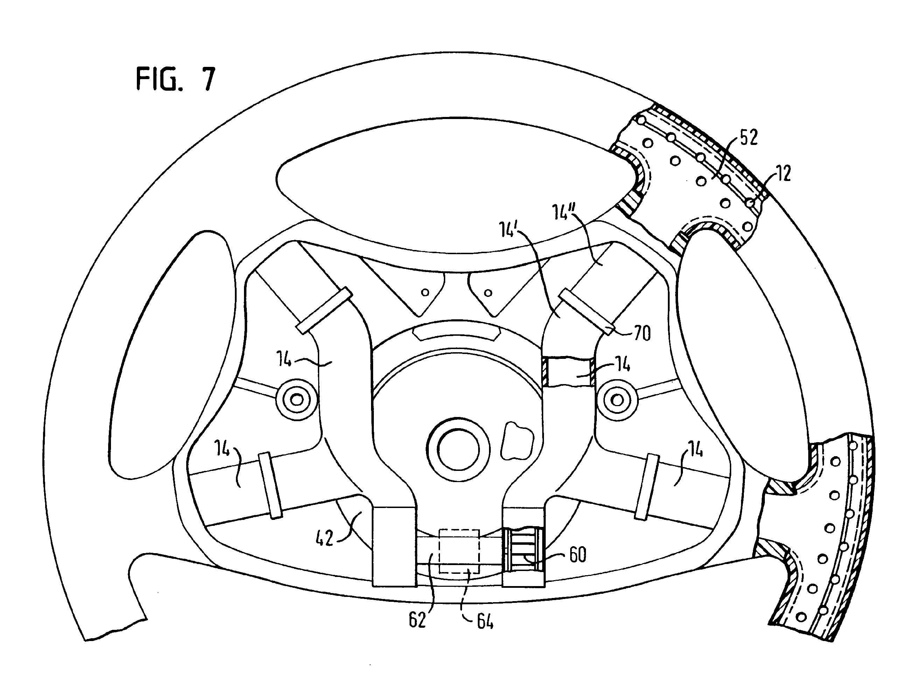

In Figur 7 werden zwei Radiallüfterschaufeln, von denen nur die rechte Lüfterschaufel 60 dargestellt ist, von einem gemeinsamen Motor 64 angetrieben. Jede Lüfterschaufel 60 speist zwei Kanäle in zwei Speichen 14 mit Luft, die dann in den Kanal 52 im Lenkradkranz gelangt.

Der Einsatz der Radiallüfter führt auf diese Weise zu einer Kostenersparnis. Die nabennahe Anordnung der Lüfter sorgt für geringere Schwingungen im Bereich des Lenkradkranzes, was dadurch noch unterstützt werden kann, daß es für jede Speiche einen radial inneren und einen radial äußeren Kanalabschnitt 14', 14" gibt, die über einen elastischen Ring 70 voneinander weitgehend schwingungsentkoppelt sind. Auch die Geräuschdämpfung kann durch die Anordnung des Lüfters im Bereich der Nabe 42 besser ausgeführt werden.

Alternativ ist es auch möglich, zwei Radiallüfter vorzusehen, die elektronisch miteinander gekoppelt sind, denn über eine elektronische Koppelung läßt sich ebenfalls ein zu starkes Schwingen oder sogar Schweben verhindern.

## Patentansprüche

1. Verfahren zum Herstellen eines Skeletts für einen Lenkradkranz aus einem Metallblech, mit den Schritten:
ein flacher Blechrohling wird so zugeschnitten, daß er einen ringförmigen Abschnitt (10) hat,
der ringförmige Abschnitt (10) wird so umgeformt, daß er ein Hohlprofil, welches im Querschnitt einen Winkel (α) größer als 180° umschließt, erhält, und
die Umformung erfolgt wenigstens teilweise, indem der ringförmige Abschnitt (10) zwischen zwei drehbaren Walzen (22, 24) bewegt wird.

2. Verfahren nach Anspruch 1, **dadurch gekennzeichnet, daß** das Umformen einen Schritt enthält, bei dem der flache ringförmige Abschnitt (10) durch Ziehen so umgeformt wird, daß er ein im wesentlichen U-förmiges Profil erhält.

3. Verfahren nach Anspruch 2, **dadurch gekennzeichnet, daß** das U-förmige Profil zwei unterschiedlich lange Schenkel (18, 20) hat und die Walzen (22, 24) den längeren Schenkel (20) umformen.

4. Verfahren nach Anspruch 2 oder 3, **dadurch gekennzeichnet, daß** die Walzen (22, 24) den radial äußeren Schenkel (20) radial einwärts biegen.

5. Verfahren nach einem der vorhergehenden Ansprüche, **dadurch gekennzeichnet, daß** wenigstens eine der Walzen (22, 24) eine gestufte Umfangsfläche aufweist.

6. Verfahren nach einem der vorhergehenden Ansprüche, **dadurch gekennzeichnet, daß** das Profil nach dem Umformen wenigstens etwa 270° umschließt.

7. Verfahren nach einem der vorhergehenden Ansprüche, **dadurch gekennzeichnet, daß** vor dem Umformen eine Anzahl von Löchern (12) in den ringförmigen Abschnitt (10) gestanzt werden.

8. Verfahren nach einem der vorhergehenden Ansprüche, **dadurch gekennzeichnet, daß** der Blechrohling einen Abschnitt (14) für wenigstens eine Speiche und einen Abschnitt (16) für eine Nabe hat, wobei die Abschnitte einstückig ineinander übergehen.

9. Verfahren nach Anspruch 8, **dadurch gekennzeichnet, daß** der ringförmige Abschnitt (10) durch Ziehen zuerst ein U-förmiges Profil mit einem radial äußeren längeren Schenkel (20) erhält, der zwischen den Walzen (22, 24) radial einwärts gebogen wird, wobei der Abschnitt (14) für die Speiche durch das Ziehen U-förmig gebogen wird.

10. Fahrzeuglenkrad mit einem einteiligen Blechskelett, dessen ringförmiger Abschnitt für den Lenkradkranz nach dem Verfahren nach einem der vorhergehenden Ansprüche so umgeformt ist, daß der ringförmige Abschnitt (10) im Querschnitt ein offenes Hohlprofil hat, wobei wenigstens ein Schalenteil (30) am Hohlprofil befestigt ist und es zur Bildung eines Kanals (52) schließt.

11. Fahrzeuglenkrad nach Anspruch 10, mit einem einteiligen Blechskelett, wobei das Blechskelett einen ringförmigen Abschnitt (10) für den Lenkradkranz, wenigstens einen Abschnitt für eine Speiche (14) und einen Abschnitt (16) für die Nabe aufweist, wobei der Kanal (52) im Lenkradkranz in einen Kanal (32), der durch Umformen des Abschnitts (14) der Speiche und Schließen dieses Abschnitts mittels eines Schalenteils (30) gebildet ist, übergeht.
